# EUROPEAN PATENT APPLICATION

(11) **EP 4 306 563 A1**
(43) Date of publication of application: **17.01.2024**
(21) Application number: 22185062.1
(22) Date of filing: 14.07.2022
(51) Int. Cl.: C08G 18/18, C08G 18/20, C08G 18/22, C08G 18/48, C08G 18/72, C08G 18/76, C08J 9/14, C08L 75/04, C08L 75/08

(54) **POLYURETHANE FOAMING SYSTEM AND RIGID FOAM PREPARED THEREFROM**

(71) Applicant: Covestro Deutschland AG, 51373 Leverkusen (DE)
(72) Inventor: TAO, Xuefei, 201206 Shanghai (CN); LIU, Jingbin, 201206 Shanghai (CN); ZHENG, Chun Lei, 200137 Waigaoqiao Pudong, Shanghai (CN)
(74) Representative: Levpat

(57) **Abstract**

The present invention relates to a polyurethane foaming system and a rigid foam prepared therefrom. The polyurethane foaming system comprises (A) an isocyanatereactive composition and (B) a polyisocyanate. The resulting rigid polyurethane foam has a lower molded core density and a lower thermal conductivity.

## Description

### TECHNICAL FIELD

The present invention belongs to the field of rigid polyurethane foams. Specifically, the present invention relates to a polyurethane foaming system and a rigid foam prepared therefrom.

### BACKGROUND ART

Household appliances with thermal insulation functions such as refrigerators, freezers, and water heaters generally use rigid polyurethane foams as thermal insulation materials.

Currently, there are a great variety of physical foaming agents for preparing rigid polyurethane foams, for example, pentane foaming agents, 1,1,1,3,3-pentafluoropropane (HFC-245fa), LBA, etc.

Pentane foaming agents are environmentally friendly and cost-effective. They have a higher filling density in the foaming system, although the addition of isopentane to pentane foaming agents can reduce the molded core density of rigid polyurethane foams to some limited extent. Moreover, the rigid polyurethane foams prepared with the pentane foaming agents have a higher thermal conductivity, which leads to higher energy consumption of household appliances with thermal insulation functions such as refrigerators, freezers, and water heaters.

The foams prepared with HFC-245fa have a lower thermal conductivity, but HFC-245fa is increasingly restricted in use due to its high Greenhouse Potency Potential (GWP).

The foams prepared with LBA have a lower thermal conductivity, but the formulation containing LBA has poor storage stability and is corrosive to inner liner materials of many refrigerators and freezers. Therefore, it is a common practice to employ the method of in-line premixing the foaming agent and using it as soon as possible.

Meanwhile, during preparation of rigid foams, the flowability of the foaming system has always been the technical focus. If the flowability of the foaming system is poor, there will be defects in production, such as poor foam density distribution of the article, occurrence of foam deformation and bubbles at the end of foam flow, and the like.

Therefore, from the practical point of view of industrial production, it is desirable to develop a polyurethane foaming system with good flowability, and a rigid polyurethane foam prepared therefrom has a lower molded core density and a lower thermal conductivity.

### SUMMARY OF THE INVENTION

An objective of the present invention is to provide a polyurethane foaming system with good flowability, and a rigid polyurethane foam prepared therefrom has a lower molded core density and a lower thermal conductivity.

Another objective of the present invention is to provide a rigid polyurethane foam with a lower molded core density and a lower thermal conductivity.

Therefore, according to a first aspect, the present invention provides an isocyanate-reactive composition, comprising:
(a) a combined polyether polyol, in every 100 parts by weight, comprising:
   (a1) 20-50 parts by weight of a first polyether polyol: a polyether started with aromatic amine, having a functionality of greater than 3 and a hydroxyl value in the range of 300-550 KOH/g;
   (a2) 35-60 parts by weight of a second polyether polyol: a polyether started with sucrose or sorbitol, having a functionality of greater than 4 and a hydroxyl value in the range of 300-600 KOH/g; and
   (a3) 4-20 parts by weight of a third polyether polyol: a polyether started with glycerin or propylene glycol, having a functionality of ≥2 and a hydroxyl value in the range of 50-400 KOH/g,
(b) 1-chloro-2,3,3,3-tetrafluoropropene, in an amount of 28-40 parts by weight, based on 100 parts by weight of the (a) combined polyether polyol,
(c) a foaming promoter selected from the group consisting of perfluoroalkanes, perfluoroolefins and combinations thereof, in an amount of 1-3 parts by weight, based on 100 parts by weight of the (a) combined polyether polyol,
(d) a foam stabilizer, in an amount of 2-4 parts by weight, based on 100 parts by weight of the (a) combined polyether polyol, and
(e) a catalyst, comprising one or more of a trimerization catalyst, a gelling catalyst and a foaming catalyst, in an amount of 1-7 parts by weight, based on 100 parts by weight of the (a) combined polyether polyol.

According to a second aspect, the present invention provides a polyurethane foaming system, comprising:
(A) the isocyanate-reactive composition according to the first aspect of the present invention; and
(B) a polyisocyanate.

According to a third aspect, the present invention provides a method for preparing a rigid polyurethane foam, comprising the steps of:
i) supplying the polyurethane foaming system according to the second aspect of the invention to a cavity of a closed mold; and
ii) subjecting the polyurethane foaming system to a foaming reaction to obtain a rigid polyurethane foam.

According to a fourth aspect, the present invention provides a rigid polyurethane foam obtained by reaction of the aforementioned polyurethane foaming system.

According to a fifth aspect, the present invention provides an article, comprising the rigid polyurethane foam according to the third aspect of the present invention.

The isocyanate-reactive composition of the present invention has good storage stability, the polyurethane foaming system has good flowability for foaming and filling, and the rigid polyurethane foam prepared with the polyurethane foaming system has a lower molded core density and a lower thermal conductivity. The molded core density can reach 30-35 kg/m³, and the thermal conductivity can be as low as 15.8-16.5 mW/m^{∗}K.

### DETAILED DESCRIPTION OF THE INVENTION

Various aspects and further objectives, features and advantages of the present invention will be demonstrated in a more comprehensive manner hereinafter.

### Isocyanate-reactive composition

According to the first aspect, the present invention provides an isocyanate-reactive composition, comprising:
(a) a combined polyether polyol, in every 100 parts by weight, comprising:
   (a1) 20-50 parts by weight of a first polyether polyol: a polyether started with aromatic amine, having a functionality of greater than 3 and a hydroxyl value in the range of 300-550 KOH/g;
   (a2) 35-60 parts by weight of a second polyether polyol: a polyether started with sucrose or sorbitol, having a functionality of greater than 4 and a hydroxyl value in the range of 300-600 KOH/g; and
   (a3) 4-20 parts by weight of a third polyether polyol: a polyether started with glycerin or propylene glycol, having a functionality of ≥2 and a hydroxyl value in the range of 50-400 KOH/g,
(b) 1-chloro-2,3,3,3-tetrafluoropropene, in an amount of 28-40 parts by weight, based on 100 parts by weight of the (a) combined polyether polyol,
(c) a foaming promoter selected from the group consisting of perfluoroalkanes, perfluoroolefins and combinations thereof, in an amount of 1-3 parts by weight, based on 100 parts by weight of the (a) combined poly ether polyol,
(d) a foam stabilizer, in an amount of 2-4 parts by weight, based on 100 parts by weight of the (a) combined polyether polyol, and
(e) a catalyst, comprising one or more of a trimerization catalyst, a gelling catalyst and a foaming catalyst, in an amount of 1-7 parts by weight, based on 100 parts by webined polyether polyol.

The "polyether polyol" used in the present application has a definition well-known to the skilled in the art, and can be prepared by a known process, for example, by reaction of olefin oxides and starter in the presence of a catalyst.

Preferably, the first polyether polyol (a1) useful for the present invention has a hydroxyl value of 350-500 mgKOH/g, more preferably 350-450 mgKOH/g.

When used in the present invention, unless otherwise specified, the functionality and the hydroxyl value refer to an average functionality and an average hydroxyl value.

The hydroxyl value described in the present application is measured in accordance with ISO 14900-2017.

Preferably, the combined polyether polyol, in every 100 parts by weight, comprises 30-45 parts by weight of the first polyether polyol, preferably 30-40 parts by weight of the first polyether polyol.

Preferably, the first polyether polyol is selected from polyethers started with ortho-toluenediamine (o-TDA) or ortho-phenylenediamine (o-PDA).

More preferably, the first polyether polyol is selected from propylene oxide-based polyethers started with ortho-toluenediamine (o-TDA) or ortho-phenylenediamine (o-PDA).

Preferably, the first polyether polyol has a viscosity at 25°C in the range of 20,000-45,000 mPa·s.

The viscosity of the polyether polyol described in the description of the present application is measured at 25°C in accordance with DIN 53019-1-3.

Preferably, the second polyether polyol (a2) of the present invention has a hydroxyl value of 350-550 mgKOH/g, more preferably 350-480 mgKOH/g.

Preferably, the combined polyether polyol, in every 100 parts by weight, comprises 45-65 parts by weight of the second polyether polyol, preferably 50-60 parts by weight of the second polyether polyol.

Preferably, the second polyether polyol is selected from propylene oxide-based polyethers started from sucrose or sorbitol.

Preferably, the second polyether polyol has a viscosity at 25°C in the range of 8,000-40,000 mPa·s.

Preferably, the third polyether polyol (a3) of the present invention has a hydroxyl value of 50-350 mgKOH/g, more preferably 100-350 mgKOH/g.

Preferably, the combined polyether polyol, in every 100 parts by weight, comprises 5-15 parts by weight of the third polyether polyol, preferably 8-12 parts by weight of the third polyether polyol.

More preferably, the third polyether polyol is selected from propylene oxide-based polyethers started from glycerin or propylene glycol.

Preferably, the third polyether polyol has a viscosity at 25°C in the range of 150-1,500 mPa·s.

Preferably, the isocyanate-reactive composition comprises 1-chloro-2,3,3,3-tetrafluoropropene, in an amount of 32-38 parts by weight, based on 100 parts by weight of the (a) combined polyether polyol.

The isocyanate-reactive composition comprises a foaming promoter selected from the group consisting of perfluoroalkanes, perfluoroolefins and combinations thereof, in an amount of 1-3 parts by weight, based on 100 parts by weight of the (a) combined polyether polyol.

As examples of perfluoroalkanes, mention may be made of C5-18 perfluoroalkanes, such as PF5056 from 3M Company.

As examples of perfluoroolefins, mention may be made of perfluoro-4-methyl-2-pentene, such as Noah2100A from Zhejiang Noah Fluoro Chemical Co., Ltd.

Preferably, the foaming promoter is selected from perfluoroalkanes. More preferably, the foaming promoter is C5-18 perfluoroalkane.

Preferably, the foam stabilizer is selected from ethylene oxide derivatives and propylene oxide derivatives of siloxane.

As examples for commercial products of the foam stabilizer, mention may be made of AK88308 from Nanjing Maysta New Materials Co., Ltd. and Y16269 from the company Momentive Performance Materials.

The trimerization catalyst, the gelling catalyst and the foaming catalyst of the present invention may be those commonly used in the field of rigid polyurethane foams.

As examples of the trimerization catalyst, mention may be made of methylammonium salts, ethylammonium salts, octylquatemary ammonium salts, hexahydrotriazine and organometallic bases.

As examples of the gelling catalyst, mention may be made of dimethylcyclohexylamine and dimethylbenzylamine.

As examples of the foaming catalyst, mention may be made of pentamethyldiethylenetriamine, bis-dimethylaminoethylether, N,N,N',N"-tetramethylethylenediamine, N,N,N',N"-tetramethylbutanediamine and tetramethylhexamethylenediamine.

The isocyanate-reactive composition may further comprise water, in an amount of 1-3 parts by weight, preferably 1.5-2.5 parts by weight, based on 100 parts by weight of the combined polyether polyol.

The isocyanate-reactive composition of the present invention has good storage stability.

### Polyurethane foaming system

According to the second aspect, the present invention provides a polyurethane foaming system, comprising:
(A) the isocyanate-reactive composition according to the first aspect of the present invention; and
(B) a polyisocyanate.

The polyisocyanate has an isocyanate index in the range of 1-1.40, preferably in the range of 1.05-1.3, based on the polyether polyol and water contained in the polyurethane foaming system.

The isocyanate index mentioned in the present application is generally based on the polyether polyol and water contained in the polyurethane foaming system or the isocyanate-reactive composition. It should be understood that as the polyisocyanate is sensitive to water, the raw material of the polyisocyanate is substantially free of water, and the polyether polyol and water contained in the polyurethane foaming system are substantially the same as those in the isocyanate-reactive composition.

The (B) polyisocyanate may include diisocyanate, which can be any aliphatic, cycloaliphatic or aromatic isocyanate known to be useful for preparation of polyurethane.

As examples of the diisocyanate, mention may be made of: 2,2'-diphenylmethane diisocyanate, 2,4-diphenylmethane diisocyanate, 4,4'-diphenylmethane diisocyanate; methylene diphenyl diisocyanate homologues with three or more rings (polymeric MDI); hydrogenated methylene diphenyl diisocyanate (HMDI), isophorone diisocyanate (IPDI), oligomers of isophorone diisocyanate; 2,4-toluene diisocyanate (2,4-TDI), 2,6-toluene diisocyanate; tetramethylene diisocyanate, oligomers of tetramethylene diisocyanate; hexamethylene diisocyanate (HDI), oligomers of hexamethylene diisocyanate; and naphthalene diisocyanate (NDI).

Preferably, the polyisocyanate is polymethylene polyphenyl isocyanate, such as tetramethylene diisocyanate, oligomers of tetramethylene diisocyanate; hexamethylene diisocyanate (HDI), oligomers of hexamethylene diisocyanate.

Preferably, the polyisocyanate has an isocyanato content of 30-32 wt.%, based on the total weight of the isocyanate.

Preferably, the polyisocyanate has a viscosity at 25°C of 250-450 mPa·s.

The viscosity of the polyisocyanate described in the present application is measured in accordance with DIN 53019-1-3.

Preferably, the polyisocyanate is in an amount of 100-160 parts by weight, preferably 120-150 parts by weight, based on 100 parts by weight of the (a) combined polyether glycol.

The polyurethane foaming system of the present invention has good flowability for foaming and filling.

### Method for preparing a rigid polyurethane foam

According to the third aspect, the present invention provides a method for preparing a rigid polyurethane foam, comprising the steps of:
i) supplying the polyurethane foaming system according to the second aspect of the invention to a cavity of a closed mold; and
ii) subjecting the polyurethane foaming system to a foaming reaction to obtain a rigid polyurethane foam.

The mold has a feeding hole and an exhaust hole.

The isocyanate-reactive composition and the polyisocyanate of the polyurethane foaming system are mixed and supplied to a cavity of a closed mold via the feeding hole on the mold.

Preferably, the isocyanate-reactive composition of the polyurethane foaming system is transported at room temperature.

The foaming reaction is typically carried out when the raw materials are at the temperature of 16-24°C, preferably at the temperature of 18-22°C.

### Rigid polyurethane foam and article comprising the same

According to the fourth aspect, the present invention provides a rigid polyurethane foam obtained by reaction of the aforementioned polyurethane foaming system.

The rigid polyurethane foam has a lower molded core density and a lower thermal conductivity. The molded core density can reach 30-32 kg/m³, and the thermal conductivity can be as low as 15.8-16.5 mW/m^{∗}K.

The molded core density in the present application is measured in accordance with GB/T 6343-2009.

The thermal conductivity in the present application is measured in accordance with ASTM C177-2010.

According to the fifth aspect, the present invention provides a thermal insulation product, comprising the rigid polyurethane foam according to the fourth aspect of the present invention.

The thermal insulation product is selected from the group consisting of containers, refrigerators, freezers, prefab houses, cold storage rooms, refrigerated boxes, refrigerated trucks, water heaters, thermal insulation barrels, thermal insulation boxes, thermal insulation pipes and thermal insulation boxes.

In the present application, the terms "comprising" and "including" cover the circumstances further comprising or including other elements not expressly mentioned and the circumstances consisting of the elements mentioned.

Unless otherwise defined, all technical and scientific terms used herein have the same meaning as commonly understood by the skilled in the field the present invention belongs to. When the definition of a term in the present description conflicts with the meaning as commonly understood by the skilled in the field the present invention belongs to, the definition described herein shall prevail.

Unless otherwise specified, all numerical values expressing the amount, viscosity and the like of the ingredients in the description and claims should be understood as being modified by the term "about". Therefore, unless indicated to the contrary, the numerical value parameters described herein are approximate values that may be varied according to the desired properties.

### Examples

The conception, specific structure and the technical effect of the present invention will be further illustrated hereinafter in conjunction with the Examples, so that the skilled in the art can fully understand the objectives, features and effects of the present invention. It is not difficult for the skilled in the art to understand that the Examples herein are for the purpose of illustration only, and the scope of the present invention is not limited thereto.

### Raw materials used

### Polyether polyols

Polyether polyol A: propylene oxide (PO)-based polyether polyol started with toluenediamine, having a hydroxyl value of 400 mgKOH/g and a viscosity of 30,000 mPa·s, commercially available from Covestro Polymers Co., Ltd.

Polyether polyol B: propylene oxide (PO)-based polyether polyol started with sucrose, having a hydroxyl value of 450 mgKOH/g and a viscosity of 18,000 mPa·s, commercially available from Jurong Ningwu New Material Development Co., Ltd.

Polyether polyol C: propylene oxide (PO)-based polyether polyol started with sucrose, having a hydroxyl value of 380 mgKOH/g and a viscosity of 11,000 mPa·s, commercially available from Jurong Ningwu New Material Development Co., Ltd.

Polyether polyol D: propylene oxide (PO)-based polyether polyol started with sorbitol, having a hydroxyl value of 450 mgKOH/g and a viscosity of 14,000 mPa·s, commercially available from Yadong Chemical Group Co., Ltd.

Polyether polyol E: propylene oxide (PO)-based polyether polyol started with glycerin, having a hydroxyl value of 240 mgKOH/g and a viscosity of 250 mPa·s, commercially available from Jurong Ningwu New Material Development Co., Ltd.

Polyether polyol F: propylene oxide (PO)-based polyether polyol started with propylene glycol (PG), having a hydroxyl value of 100 mgKOH/g and a viscosity of 160 mPa·s, commercially available from Covestro Polymers Co., Ltd.

### Foam stabilizer

AK88308: a foam stabilizer, commercially available from Nanjing Maysta New Materials Co., Ltd.

### Foaming agents

1-chloro-2,3,3,3-tetrafluoropropene: HCFO-1224yd, commercially available from AGC Chemicals Company.

Monochlorotrifluoropropene: LBA, commercially available from Sinochem Lantian Honeywell New Material Co., Ltd.

Cyclopentane: commercially available from Guangzhou Meilong Company.

### Foaming promoters

C5-18-perfluoroalkane: PF5056, commercially available from 3M China Co., Ltd.

Perfluoro-4-methyl-2-pentene: Noah2100A, commercially available from Zhejiang Noah Fluoro Chemical Co., Ltd.

### Catalysts

Trimerization catalyst: Dabco Polycat 41 (abbreviated as PC 41), commercially available from Air Products and Chemicals (China) Investment Co., Ltd.

Gelling catalyst: Dabco polycat 8 (abbreviated as PC 8), commercially available from Air Products and Chemicals (China) Investment Co., Ltd.

Foaming catalyst: Dabco polycat 5 (abbreviated as PC 5), commercially available from Air Products and Chemicals (China) Investment Co., Ltd.

### Isocyanate

Isocyanate: Desomdur^{®} 44V20L, having an NCO content of 31.5 wt.%, commercially available from Covestro Polymers (China) Co., Ltd.

### Test methods

Flowability: The flowability of the foam system was tested with a 1.1-meter Lanze mold. The smaller the weight of the foam that exactly fills the Lanze mold (exact filling weight), the better the flowability of the system.

Molded core density: It refers to the core density of the molded foam, which was determined by the average value of multiple samples (with the surface removed) having the dimensions of 40 mm×40 mm×40 mm.

Free rise density: tested in accordance with "GB/T 6343-2009 Cellular plastics and rubbers - Determination of apparent density".

Average thermal conductivity: tested in accordance with "GB/T 3399-1982 Test method for thermal conductivity of plastics by means of the guarded hot plate". The temperature difference between the upper and lower plates is 10°C.

Dimensional change rate: tested in accordance with "GB/T 8811-2008 Rigid cellular plastics - Test method for dimensional stability". The dimensional change rate at low temperature was tested after the sample was stored at -30°C for 48 hours, and the dimensional change rate at high temperature was tested after the sample was stored at 70°C for 48 hours.

Compressive strength: tested in accordance with "GB/T 8813-2008 Rigid cellular plastics - Determination of compression properties".

Storage stability: The gelation time of the formulated isocyanate-reactive composition was tested in a stainless steel pressure vessel at 25°C on the first day of formulation and after 30 days of storage, respectively. The smaller the change in gelation time, the better the storage stability.

### Examples 1-4 and Comparative Examples 1-2

According to the ingredients shown in Table 1, the polyether polyols were mixed with the foaming agents, the foam stabilizer, the catalysts and water by a premixing device to obtain an isocyanate-reactive composition. Then, this composition and the isocyanate (Desomdur^{®} 44V20L) were respectively transported via pipelines to a high-pressure machine. They were mixed and transported by the high-pressure machine to a mold for closed-mold mixing and infusion at normal pressure. After reaching a specified demolding time (about 5 minutes), the foamed and molded polyurethane foam was taken out from the mold. The gelation time of the isocyanate-reactive composition on the first day and after 30 days of storage, and various properties of the resulting foam were tested. The results are shown in Table 1.

**Table 1**

| | Unit | Example 1 | Example 2 | Example 3 | Example 4 | Comparative Example 1 | Comparative Example 2 |
|---|---|---|---|---|---|---|---|
| Polyether glycol A (started with toluene diamine) | Part by weight | 35 | 35 | 35 | 35 | 35 | 35 |
| Polyether glycol B (started with sucrose) | Part by weight | 35 | 35 | - | 35 | 35 | 25 |
| Polyether glycol C (started with sucrose) | Part by weight | 20 | 20 | 15 | 20 | 20 | 25 |
| Polyether glycol D (started with sorbitol) | Part by weight | - | - | 40 | - | - | - |
| Polyether glycol E (started with glycerin) | Part by weight | 10 | - | 10 | - | 10 | 15 |
| Polyether glycol F (started with propylene glycol) | Part by weight | - | 10 | - | 10 | - | - |
| Foam stabilizer | Part by weight | 3 | 3 | 3 | 3 | 3 | 3 |
| Trimerization catalyst | Part by weight | 0.6 | 0.6 | 0.6 | 0.6 | 0.6 | 0.6 |
| Gelling catalyst | Part by weight | 1.6 | 1.6 | 1.6 | 1.6 | 1.6 | 1.6 |
| Foaming catalyst | Part by weight | 0.6 | 0.6 | 0.6 | 0.6 | 0.6 | 0.6 |
| Water | Part by weight | 2.0 | 2.0 | 2.0 | 2.0 | 2.0 | 2.0 |
| PF5056 | Part by weight | 1.5 | 1.5 | 2 | - | - | 2 |
| Noah2100A | Part by weight | - | - | - | 1.5 | - | - |
| LBA | Part by weight | - | - | - | - | 32 | - |
| HCFO-1224yd | Part by weight | 35 | 35 | 35 | 35 | - | - |
| Cyclopentane | Part by weight | - | - | - | - | - | 14 |
| Isocyanate | Part by weight | 136 | 136 | 136 | 136 | 136 | 140 |
| Free rise density | kg/m³ | 22.8 | 22.9 | 22.9 | 23 | 23 | 24.8 |
| Exact filling weight | 9 | 480 | 478 | 478 | 480 | 481 | 525 |
| Molded core density | kg/m³ | 30.9 | 31.1 | 31.1 | 31 | 31.2 | 34.5 |
| Compressive strength | Kpa | 175 | 172 | 177 | 173 | 165 | 182 |
| Average thermal conductivity | mW/m^{∗}K | 16.13 | 16.15 | 16.07 | 16.13 | 16.63 | 18.43 |
| Dimensional change rate at low temperature (-30°C) | % | -0.18 | -0.20 | -0.21 | -0.27 | -0.26 | -0.29 |
| Dimensional change rate at high temperature (70°C) | % | 0.23 | 0.31 | 0.30 | 0.28 | 0.27 | 0.30 |
| Gelation time on the first day | sec | 40 | 40 | 40 | 40 | 40 | 40 |
| Gelation time after 30 days of storage | sec | 41 | 41 | 41 | 42 | 55 | 41 |

As can be seen from Table 1, the foaming systems in Examples 1-4 have good flowability and storage stability, and the foams prepared therefrom have a low molded core density and a low thermal conductivity.

The foaming system in Comparative Example 1 has poor storage stability. The foam prepared in Comparative Example 2 has a high molded core density and a high thermal conductivity.

Only exemplary embodiments or examples of the present invention are described above, and they are not intended to limit the present invention. For the skilled in the art, the present invention may be modified or changed in various manners. Any modification, equivalent replacement, improvement and the like made without departing from the spirit and principles of the present invention shall fall within the scope of the claims of the present application.

## Claims

1. An isocyanate-reactive composition, comprising:
(a) a combined polyether polyol, in every 100 parts by weight, comprising:
(a1) 20-50 parts by weight of a first polyether polyol: a polyether started with aromatic amine, having a functionality of greater than 3 and a hydroxyl value in the range of 300-550 KOH/g;
(a2) 35-60 parts by weight of a second polyether polyol: a polyether started with sucrose or sorbitol, having a functionality of greater than 4 and a hydroxyl value in the range of 300-600 KOH/g; and
(a3) 4-20 parts by weight of a third polyether polyol: a polyether started with glycerin or propylene glycol, having a functionality of ≥2 and a hydroxyl value in the range of 50-400 KOH/g,
(b) 1-chloro-2,3,3,3-tetrafluoropropene, in an amount of 28-40 parts by weight, based on 100 parts by weight of the (a) combined polyether polyol,
(c) a foaming promoter selected from the group consisting of perfluoroalkanes, perfluoroolefins and combinations thereof, in an amount of 1-3 parts by weight, based on 100 parts by weight of the (a) combined polyether polyol,
(d) a foam stabilizer, in an amount of 2-4 parts by weight, based on 100 parts by weight of the (a) combined polyether polyol, and
(e) a catalyst comprising one or more of a trimerization catalyst, a gelling catalyst and a foaming catalyst, in an amount of 1-7 parts by weight, based on 100 parts by weight of the (a) combined polyether polyol.

2. The isocyanate-reactive composition of claim 1, wherein the first polyether polyol is selected from polyethers started with ortho-toluenediamine (o-TDA) or ortho-phenylenediamine (o-PDA); preferably, the first polyether polyol is selected from propylene oxide-based polyethers started with ortho-toluenediamine (o-TDA) or ortho-phenylenediamine (o-PDA).

3. The isocyanate-reactive composition of claim 1 or 2, wherein the second polyether polyol is selected from propylene oxide-based polyethers started with sucrose or sorbitol.

4. The isocyanate-reactive composition of any one of claims 1 to 3, wherein the third polyether polyol is selected from propylene oxide-based polyethers started with glycerin or propylene glycol.

5. The isocyanate-reactive composition of any one of claims 1 to 4, wherein the foaming promoter is selected from perfluoroalkane; preferably, the foaming promoter is C5-18 perfluoroalkane.

6. The isocyanate-reactive composition of any one of claims 1 to 5, wherein the foam stabilizer is selected from ethylene oxide derivatives and propylene oxide derivatives of siloxane.

7. The isocyanate-reactive composition of any one of claims 1 to 6, wherein the trimerization catalyst is selected from the group consisting of methylammonium salts, ethylammonium salts, octylquaternary ammonium salts, hexahydrotriazine, organometallic bases and combinations thereof; the gelling catalyst is selected from the group consisting of dimethylcyclohexylamine, dimethylbenzylamine and combinations thereof; and the foaming catalyst is selected from the group consisting of pentamethyldiethylenetriamine, bis-dimethylaminoethylether, N,N,N',N"-tetramethylethylenediamine, N,N,N',N"-tetramethylbutanediamine, tetramethylhexamethylenediamine and combinations thereof.

8. The isocyanate-reactive composition of any one of claims 1 to 7, further comprising water. in an amount of 1-3 parts by weight, based on 100 parts by weight of the (a) combined polyether polyol.

9. A polyurethane foaming system, comprising:
(A) the isocyanate-reactive composition of any one of claims 1 to 8; and
(B) a polyisocyanate.

10. The polyurethane foaming system of claim 9, wherein the polyisocyanate is one or more selected from the following: 2,2'-diphenylmethane diisocyanate, 2,4-diphenylmethane diisocyanate, 4,4'-diphenylmethane diisocyanate; methylene diphenyl diisocyanate homologues with three or more rings (polymeric MDI); hydrogenated methylene diphenyl diisocyanate (HMDI), isophorone diisocyanate (IPDI), oligomers of isophorone diisocyanate; 2,4-toluene diisocyanate (2,4-TDI), 2,6-toluene diisocyanate; tetramethylene diisocyanate, oligomers of tetramethylene diisocyanate; hexamethylene diisocyanate (HDI), oligomers of hexamethylene diisocyanate; and naphthalene diisocyanate (NDI).

11. The polyurethane foaming system of claim 9 or 10, wherein the polyisocyanate has an isocyanate index in the range of 1-1.40, preferably in the range of 1.05-1.3, based on the polyether polyol and water contained in the polyurethane foaming system.

12. A rigid polyurethane foam obtained by reaction of the polyurethane foaming system of any one of claims 9 to 11.

13. A thermal insulation product, comprising the rigid polyurethane foam of claim 12.
